# EUROPEAN PATENT SPECIFICATION

(11) **EP 1 336 622 B1**
(45) Date of publication and mention of the grant of the patent: **24.08.2005**
(21) Application number: 02003728.9
(22) Date of filing: 19.02.2002
(51) Int. Cl.: C08F 2/34, C08F 293/00

(54) **Process for the gas phase radical polymerization**
Verfahren zur radikalischen Gasphasenpolymerisation
Procédé de polymérisation radicalaire en phase gazeuse

(43) Date of publication of application: 20.08.2003
(73) Proprietor: Henkel Kommanditgesellschaft auf Aktien, 40589 Düsseldorf (DE)
(72) Inventor: Nishida, Haruo Prof., Fukuoka 820-0070 (JP); Yasutake, Mikio, Dr., Koga-shi, Fukuoka 811-3106 (JP); Endo, Takeshi Prof. Dr., Yamagata 992-8510 (JP); Meier, Frank Dr., 40589 Düsseldorf (DE)

(56) References cited:
- EP-A- 1 130 035
- DE-A- 19 838 241
- US-A- 4 454 299
- US-A- 5 789 487
- WANG J.-S. ET AL: "Controlled Sequential and Random Radical Copolymerisation of Styrene and Butyl Acrylate" POLYM. PREP., vol. 36, no. 1, pages 465-466, XP001087542

## Description

The present invention relates to a novel method for preparing co-polymers by Gas Phase Radical Polymerization and compositions of copolymers thereof.

The formation of block or graft copolymers of non-vinyl polymers with vinyl monomers by a radical mechanism has been reported to have been achieved by two methods. One is the use of an end functional polymer which can react with end- or pendent groups of the second polymer, the second method is to use a starting step-grown polymer as a macroinitiator and grow the vinyl polymer from it, or the use of a monofunctional vinyl polymer in a step growth polymerization with AA and BB monomers.

However, both of the above methods have certain limitations. The first method requires that well defined vinyl polymers with known functionalities be made. The other method requires that functional groups must be present at the ends of the polymer (block) or dispersed along the polymer backbone (graft) which can react with those on the vinyl polymer. Also, if the vinyl polymer is not compatible with the growing polycondensation polymer the polymerization will result in incomplete formation of a block or graft copolymer and a mixture of homopolymers. In the second method, by using conventional radical polymerization, the generation of a radical at either a pendent group or at a chain end results not only in the synthesis of homopolymer, due to transfer to monomer or polymer, but also may lead to the formation of crosslinked gels.

Thus, a polymerization can be initiated by decomposition of a functional group (azo, peroxy, etc.) either in the macroinitiator's backbone or along a pendent side group. Further, an irreversible activation of a functional group can take place at the polymer chain-ends or attached to a pendent side group.

The introduction of functional groups in a macroinitiator backbone is usually accomplished by copolymerization of a functional monomer during the synthesis of the macroinitiator. The functional monomer contains a functional group which can decompose. These radicals can then initiate the polymerization of a vinyl monomer to form a block copolymer. If more than one functional group is present in the macroinitiator, then the chain can be broken into smaller chains which have radicals at both ends.

Although these methods have produced block and graft copolymers, the materials that have been prepared are not well defined. In most cases, homopolymers of the vinyl monomers are formed due to transfer to monomer during the radical polymerization or because of a second radical formed during the decomposition of the azo or peroxy group. In the synthesis of graft copolymers, crosslinked gels can be formed if termination of the growing vinyl polymer is by combination. The molecular weights of the grafts or blocks that are synthesized by the radical polymerizations have so far not been very well defined. Also, not all of the azo (or peroxy) groups may decompose and/or initiate polymerization during the synthesis of a block or graft copolymer. Because of incomplete initiation, the number of grafts, or length of blocks cannot be accurately predicted. Moreover, the process of preparation of the macromonomers is tedious, expensive and time consuming The process thus lacks industrial applicability.

Thus, there is a need for a method to prepare block copolymers that are well defined and essentially free of homopolymer.

Most of the above-mentioned prior art methods for preparing block copolymers by radical polymerization, however, use a conventional solvent based method of preparation.

The document WO 00/11043 relates to a method for producing defined layers or layer systems made of polymers or oligomers on any solid surface with a controlled structure, according to which the layers are chemically deposited on a solid surface by means of life-controlled free-radical polymerization. The method comprises bonding an initiator to a solid surface via an active group, carrying out a life-controlled free-radical polymerization by reacting the surface bound initiator with monomers, macromonomers or mixtures able to undergo free-radical polymerization, where a polymer layer on the solid surface is produced. The described process, however, suffers from several disadvantages. One of the main problems is that the polymerization is performed in a solvent. This, however, is disadvantageous in terms of polymer built-up control and the fact that the polymer itself has to be isolated and separated from the solvent.

The DE 198 05 085 A1 relates to polymerization initiating systems on carriers which can be used to radically polymerize olefinical unsaturated monomers and copolymerize such monomers with further monomers in suspension or gas phase polymerization. The document, however, does not describe a process for the production of polymers with a controlled block structure.

The WO 98/01480 relates to a process for the living radical polymerization by the ATRP-mechanism. The process can be performed in the gas phase. The document, however is directed to a process in a liquid environment. In order to restart the polymerization process, transition metals have to be added.

The increasing demand for materials which have on their surface a polymer layer with tailor made properties has thus triggered the demand for a process which allows to easily cover surfaces with such polymer layers.

Thus, there is a need for a method to prepare block copolymers with well defined lengths and/or number of blocks that can be tailor made. There is also a need for a controlled polymerization of ethylenical unsaturated monomers, such as styrene or acrylate or methacrylate esters that can produce a block copolymer under industrially acceptable conditions. Furthermore there is a need for a method to produce block copolymers which provides for an easy exchangeability of monomers. There is also a need for a method to easily cover substrate surfaces with tailor made polymers in order to modify the surface characteristics according to specific needs.

The objects of the present invention are to provide a process for the production of polymers, which fulfill the above mentioned needs.

Accordingly, applicants have discovered a novel method which produces a block copolymer, and which allows for the production of block copolymers on a substrate surface where the block copolymer can be produced with tailor made properties. Furthermore, this method can be carried out under conditions suitable for commercial utilization.

The present invention provides a method to synthesize block copolymers by controlled radical gas phase polymerization.

The present invention thus relates to a process for the radical copolymerization of at least two different ethylenical unsaturated monomers in a reactor, comprising the steps of
a) radically polymerizing one or more radically polymerizable monomers in the presence of a system comprising at least one initiator on a substrate and at least one ethylenical unsaturated monomer in the gas phase,
b) lowering the concentration of at least one ethylenical unsaturated monomer in the gas phase such that the polymerization reaction stops and
c) introducing at least one ethylenical unsaturated monomer into the reactor which is different from at least one ethylenical unsaturated monomer in the gas phase of step a).

In the context of the present application, the term "macromolecule" refers to a molecule containing a large number of monomeric units and having a number average molecular weight (Mₙ) of at least 500.

### (I) Monomers

According to the present invention any radically polymerizable alkene can serve as a monomer for polymerization. The preferred monomers include those of the formula (I) 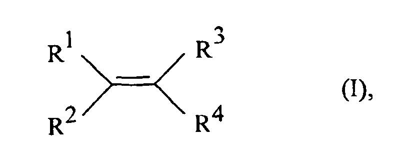 wherein R¹ and R² are independently selected from the group consisting of H, halogen, CF₃ straight or branched alkyl of 1 to 20 carbon atoms (preferably from 1 to 6 carbon atoms, more preferably from 1 to 4 carbon atoms), aryl, □,□-□unsaturated straight or branched alkenyl or alkynyl of 2 to 10 carbon atoms (preferably from 2 to 6 carbon atoms, more preferably from 2 to 4 carbon atoms), □,□-unsaturated straight or branched alkenyl of 2 to 6 carbon atoms (preferably vinyl) substituted (preferably at the □-position) with a halogen (preferably chlorine), C₃-C₈ cycloalkyl, heterocycloalkyl, YR⁵, C(=Y)R⁵, C(=Y)YR⁵, C(=Y)NR⁶R⁷ and YC(=Y)R⁶, where Y may be S, NR⁶ or O (preferably O), R⁵ and R⁶ is alkyl of from 1 to 20 carbon atoms, alkoxy of from 1 to 20 carbon atoms, aryloxy or heterocycloxy, R⁶ and R⁷ are independently H or alkyl of from 1 to 20 carbon atoms, or R⁶ and R⁷ may be joined together to form an alkylene group of from 2 to 5 carbon atoms, thus forming a 3- to 6-membered ring, and R⁶ is H, straight or branched C₁-C₂₀ alkyl and aryl, R³ is selected from the group consisting of H, halogen (preferably fluorine or chlorine), C₁-C₆ (preferably Cₗ) alkyl, COOR⁸ (where R⁸ is H, an alkali metal, or a C₁-C₂₀ alkyl group in which each hydrogen atom may be replaced with halogen, preferably fluorine or chlorine, or CₙH₂ₙYₘSiR^{x}₃, in which n is from 1 to 8, m is 1 or 0, Y may be S or O and R^{x} is selected from the group consisting of H, Cl, C₁-C₂-alkyl and alkoxy of from 1 to 4 carbon atoms) or aryl; or R¹ and R³ may be joined to form a group of the formula (CH₂)ₙ (which may be substituted with from 1 to 2n' halogen atoms or C₁-C₄ alkyl groups) or C(=O)-Y-C(=0), where n' is from 2 to 6 (preferably 3 or 4) and Y is as defined above; or R⁴ is the same as R¹ or R² or optionally R⁴ is a CN group.

In the context of the present application, the terms "alkyl", "alkenyl" and "alkynyl" refer to straight-chain or branched groups (except for C₁ and C₂ groups).

Furthermore, in the present application, "aryl" refers to phenyl, naphthyl, phenanthryl, phenylenyl, anthracenyl, triphenylenyl, fluoroanthenyl, pyrenyl, chrysenyl, naphthacenyl, hexaphenyl, picenyl and perylenyl (preferably phenyl and naphthyl), in which each hydrogen atom may be replaced with alkyl of from 1 to 20 carbon atoms (preferably from 1 to 6 carbon atoms and more preferably methyl), alkyl of from 1 to 20 carbon atoms (preferably from 1 to 6 carbon atoms and more preferably methyl) in which each of the hydrogen atoms can be independently replaced by a halide (for example by a fluoride or a chloride), alkenyl of from 2 to 20 carbon atoms, alkynyl of from 1 to 20 carbon atoms, alkoxy of from 1 to 6 carbon atoms, alkylthio of from 1 to 6 carbon atoms, C₃-C₈ cycloalkyl, phenyl, halogen, NH₂, C₁-C₆ alkylamino, C₁-C₆ dialkylamino, and phenyl, which may be substituted with from 1 to 5- halogen atoms and/or C₁-C₆ alkyl groups. (This definition of "aryl" also applies to the aryl groups in "aryloxy" and "aralkyl"). Thus, phenyl may be substituted from 1 to 5 times and naphthyl may be substituted from 1 to 7 times (preferably, any aryl group, if substituted, is substituted from 1 to 3 times) with one of the above substituents.

More preferably, "aryl" refers to phenyl, naphthyl, phenyl substituted from 1 to 5 times with fluorine or chlorine, and phenyl substituted from 1 to 3 times with a substituent selected from the group consisting of alkyl of from 1 to 6 carbon atoms, alkoxy of from 1 to 4 carbon atoms and phenyl. Most preferably, "aryl" refers to phenyl and tolyl.

In the context of the present invention, "heterocyclyl" refers to pyridyl, furyl, pyrrolyl, thienyl, imidazolyl, pyrazolyl, pyrazonyl, pyrimidinyl, pyridazinyl, pyranyl, indolyl, isoindolyl, indazoiyl, benzofuryl, isobenzofuryl, benzothienyl, isobenzothienyl, chromenyl, xanthenyl, purinyl, piperidinyl, quinolyl, isoquinolyl, phthalazinyl, quinazolinyl, quinoxalinyl, naphthyridinyl, phenoxathiinyl, carbazolyl, cinnolinyl, phenanthridinyl, acridinyl, 1,10-phenanthrolinyl, phenazinyl, phenoxazinyl, phenothiazinyl, oxazolyl, thiazolyl, isoxazolyl, isothiazolyl, and hydrogenated forms thereof known to those in the art.

Preferred heterocyclyl groups include pyridyl, furyl, pyrrolyl, thienyl, imidazolyl, pyrazolyl, pyrazinyl, pyrimidinyl, pyridazinyl, pyranyl and indolyl, the most preferred heterocyclyl group being pyridyl. Accordingly, suitable vinyl heterocyclyls to be used as a monomer in the present invention include 2-vinyl pyridine, 4-vinyl pyridine, 2-vinyl pyrrole, 2-vinyl pyrrole, 2-vinyl oxazole, 4-vinyl oxazole, 9-vinyl oxazole, 2-vinyl thiazole, 4-vinyl-thiazole, 5-vinyl-thiazole, 2-vinyl imidazole, 4-vinyl imidazole, 3-vinyl pyrazole, 4-vinyl pyrazole, 3-vinyl pyridazine, 4-vinyl pyridazine, 3-vinyl isoxazole, 3-vinyl isothiazoles, 2-vinyl pyrimidine, 4-vinyl pyrimidine, 5-vinyl pyrimidine, and any vinyl pyrazine.

The vinyl heterocycles mentioned above may bear one or more (preferably 1 or 2) C₁-C₆ alkyl or alkoxy groups, cyano groups, ester groups or halogen atoms, either on the vinyl group or the heterocyclyl group. Further, those vinyl heterocycles which, when unsubstituted, contain an N-H group may be protected at that position with a conventional blocking or protecting group, such as a C₁-C₆ alkyl group, a tris-C₁-C₆ alkylsilyl group, an acyl group of the formula R⁹CO (where R⁹ is alkyl of from 1 to 20 carbon atoms, in which each of the hydrogen atoms may be independently replaced by halide, preferably fluoride or chloride), alkenyl of from 2 to 20 carbon atoms (preferably vinyl), alkenyl of from 2 to 10 carbon atoms (preferably acetylenyl), phenyl which may be substituted with from 1 to 5 halogen atoms or alkyl groups of from 1 to 4 carbon atoms, or aralkyl (aryl-substituted alkyl, in which the aryl group is phenyl or substituted phenyl and the alkyl group is from 1 to 6 carbon atoms), etc.. (This definition of "heterocyclyl" also applies to the heterocyclyl groups in "heterocyclyloxy" and "heterocyclic ring.")

More specifically, preferred monomers include (but not limited to) styrene, vinyl acetate, acrylate and methacrylate esters of C₁-C₂₀ alcohols, acrylic acid, methacrylic acid, t-butyl acrylate, hydroxyethyl-methylacrylate, isobutene, acrylonitrile, and methacrylonitrile.

Most preferred monomers are acrylic and methacrylic acid esters having from 1 to about 20 carbon atoms in the alcohol moiety, styrene, vinyl substituted styrene, such as □-alkyl styrene or ring substituted styrene such as p-alkyl styrene; such monomers are commercially available or can be easily prepared by known esterification processes. Preferred esters are n-butyl acrylate, ethyl acrylate, methyl methacrylate, isobornyl methacrylate, 2-ethylhexyl acrylate, t-butylacrylate, hydroxyethylmethylacrylate, acrylate and methacrylate esters of C₁-C₂₀ fluorinated alcohols; preferred styrenic monomers are styrene, □-methyl styrene, p-methyl styrene, p-tert-butyl styrene, p-acetoxy styrene and ring-halogenated styrene.

### Initiators:

Generally, all systems which are able to initiate a radical polymerization of vinyl moieties containing monomers can be used as initiators according to the present invention. In a preferred embodiment of the present invention, compounds yielding radicals on suitable activation like hydroperoxides, especially cumene hydroperoxide or tert.-butyl hydroperoxide, organic peroxides like dibenzoyl peroxide, dilauric peroxide, dicumene peroxide, di-tert.-butyl peroxide, methyl ethyl ketone peroxide, tert.-butyl benzoyl peroxide, diisopropyl peroxy dicarbonate, dicyclohexyl peroxy dicarbonate, di-tert.-butyl peroxalate, inorganic peroxides like potassium persulfate, potassium peroxydisulfate or hydrogen peroxide, azo compounds like azo bis(isobutyro nitrile), 1,1'-azo bis(1-cyclohexane nitrile), 2,2'-azo bis(2-methyl butyronitrile), 2,2'-azo bis(2,4-dimethyl valeronitrile), 1,1'-azo bis(1-cyclohexane carbonitrile), dimethyl-2,2'-azobisisobutyrate, 4,4'-azo bis(4-cyano valeric acid) or triphenyl methyl azobenzene, redox systems like mixtures of peroxides and amines, mixtures of peroxides and reducing agents, optionally in the presence of metal salts and or chelating agents. Generally speaking, all initiating systems known to the skilled person from conventional radical polymerizations, like bulk polymerization or emulsion polymerization, can be employed in the method according to the present invention.

Also suitable as initiators according to the present invention are combinations of dialkylanilines and halogen compounds, boron alkyls and oxidizing agents, organometallic compounds and oxidizing agents and metal acetylacetonates.

A polymerization according to the present invention can also be initiated by photochemical initiators or initiating systems with radioactive sources or electron beams, iniferters like dithiocarbamate compounds, monosulfides, cyclic and acyclic disulfides, nitroxides including stable, free radical species and their adducts or oxidation adducts of borabicyclononane compounds.

As an initiation procedure, generally all procedures which initiate a proparating species are acceptable in the present context. In a suitable initiation procedure the initiator or the mixture of two or more initiators are subjected to an energy source which causes the generation of a species able to initiate a propagation step which causes the polymerization. Suitable types of energy comprise thermal energy, radiation like laser-light, UV-light or gamma rays or high energy particles, e.g., from radioactive sources.

According to the process of the present invention, the above-mentioned initiators can be used alone or as combinations of two or more of the above-mentioned initiators. In a preferred embodiment of the process according to the present invention, initiators are preferred which, upon heating or irradiation with a source of high energy radiation, decompose to form an initiating species, e.g., two radicals. It is, according to the present invention, most preferred to use as initiators an initiator from the group consisting of peroxides or azo compounds. In a most preferred embodiment of the present invention the initiator or the combination of initiators employed in the process according to the present invention is selected from the group consisting of a cumene hydroperoxide, tert.-butyl hydroperoxide, dibenzoyl peroxide, dilauric peroxide, dicumene peroxide, di-tert.-butyl peroxide, methyl ethyl ketone peroxide, tert.-butyl benzoyl peroxide, diisopropyl peroxydicarbonate, dicyclohexyl peroxydicarbonate, di-tert.-butyl peroxalate, potassium persulfate, potassium peroxydisulfate, hydrogen peroxide, azo bis(isobutyro nitrile), 1,1'-azo bis(1-cyclohexane carbonitrile) 4,4'-azo bis(4-cyano valeric acid) or triphenyl methyl azobenzene.

According to the process of the present invention, the initiators which are able to initiate a radical polymerization are carried on a substrate. It is possible to use initiators, which are only loosely bound to the carrier surface, e.g. by dipolar forces or by Van der Waals forces. It is, however, also possible to use initiators which are bound to the surface of the substrate by ionic bonds or covalent bonds.

The concentration of the initiators on substrates is generally in a range of from about 0,01 to about 50 µmol/cm², preferably from about 0,05 to about 10 µmol/cm² or from about 0,1 to about 5 µmol/cm².

If an initiator is to be used which is bound to the surface of the carrier by ionic or by covalent bonds, the above-mentioned types of initiators must be equipped with a functional group that allows for the above-mentioned type of bonding to the substrate surface.

The modification of a substrate surface with a functional initiator molecule is generally achieved by using initiator molecules that have at least one anchor group which is able to react with the functional groups on the substrate surface. In general, all types of reactions can be used to achieve an ionic or a covalent bond between the substrate surface and an initiator molecule. If the type of bond is ionic, usually suspending the substrate in a solution of the respective initiator molecule is sufficient to achieve a substrate with a modified surface that can be used according to the present invention.

If the bonding between the substrate and the initiator is to be covalent, only reactions that leads to a covalent bond between the substrate surface and the initiator molecule can be employed. The following anchor groups are generally suitable for functionalization of many different types of substrates:

OH, halogen, SiR¹⁰_{y}R¹¹_{z}A_{3-(y+z)} where y and z are from 0 to 2 and (y+x) is from 0 to 2 and A is preferably halogen, alkoxy or OH and R¹⁰ and R¹¹ are independently from each other linear or branched C₁-C₂₀ alkyl or linear or branched alkoxy or alkoxyalkyl, preferably ethoxy or propoxy or ethoxyalkyl or propoxyalkyl, CR=CR, CR=CR₂, CRO, COOR, COOH, COO⁻, COCI, COBr, CO-O-CO-R, CH(OH)(OR), C(OR)₃, CO-CH=CR₂, CO-NR₂, NH₂, NHR, NR₂, NH₃⁺, NH₂R⁺, NHR₂⁺, NH-COOR, C(NR)-CH=CR₂, NR-NR₂, NR-OH, NH-C(NR)-NH₂, CO-NR-NR₂, CH=CR-NR₂, CO-N=C=S, N=C=O, N=C=S, NO₃⁻, N=P(phenyl)₃, CH=P(phenyl)₃, PO₃⁻, O-PO₂Cl, PO₂Cl, COSR, CSOR, CS-NR₂, CSSR, SH, SO₃R, SO₂R, SOR, SO₃Cl, SO₃⁻, SO₂Cl, SOCl, epoxy, thiirane or aziridine.

The anchor group can also be a metal group which combines with the surface groups of the substrate in the sense of a metal organic reagent.

The linking group between the anchor group and the initiator itself can be any type of group which allows for a covalent bonding between anchor group and initiator molecule.

Suitable anchor groups and linking groups can be found in WO 00/11043 on pages 10 to 18. Pages 8 to 18 of the above-mentioned reference and the references cited there (WO 98/01480) are considered being part of the disclosure of the present text and are expressly mentioned herein.

In order to be able to be chemically modified by covalently bound initiators, the substrate surface has to bare certain functional groups. Many substrates that can be used in the process according to the present invention bare hydroxyl groups as functional surface groups. There are, however, substrates (e.g. non-polar polymers like polyethylene, polypropylene or polytetrafluoroethylene) that do not bear suitable functional groups in the sense of the present invention. Such substrates can, however, be equipped with functional groups by reactions known to the skilled person, e.g. by plasma treatment.

Besides hydroxyl groups, a substrate according to the present invention can bear functional groups like those mentioned in WO 00/11043, page 8. Page 8 of this reference is being considered part of the disclosure of the present invention.

The contact between initiator and substrate can generally be established by all contacting methods known to the skilled person which lead to the desired type of bonding between the initiator and the substrate surface. Suitable types of contacting are e.g. coating, casting, absorption from solution or vapor phase, printing for 2 D- or 3D-patterning, and so on.

In a preferred method according to the present invention, the initiators are contacted with the substrate preferably by way of contacting the substrate and the initiator compounds or a mixture of two or more initiator compounds, dissolved in a liquid phase.

The impregnation of the substrate carrier is preferably achieved by contacting a solvent or solvent mixture containing the initiator or the initiators with a carrier material, where the carrier is inert against the initiator and/or the initiator components and where the solvent or the solvent mixture can be removed, preferably completely removed, from the impregnated substrate. Preferably the amount of solvent or solvent mixture remaining on the substrate is low, e.g. less than 0,1 or less than 0.01 % by weight, relative to the weight of the initiator or the mixture of two or more initiators.

If a powder is used as a substrate, the impregnation of the substrate can achieved by contacting the substrate and the initiator or the initiators in a fluidized bed. The substrate is fluidized by a flow of inert gas and the solution containing the initiator or the initiators is brought into contact with the substrate e.g. by spraying. By an internal circulation the inert gas can be, after it was stripped from solvents and initiators, circulated back to the reactor. This process can be run batchwise or continuously.

Following the impregnation of the carrier with the initiator or the initiators, the solvent or the solvent mixture is removed as completely as possible by distillation. The distillation is carried out, depending on the boiling temperature of the solvent or the solvent mixture and the pressure during the distillation, at a temperature of about 10 to about 150°C, preferably at 10 to 70°C, and at pressures of 0,001 up to about 20 bar, preferably at about 0,001 mbar up to about ambient pressure. The distillation temperature, however, has to be lower than the activation temperature of the initiator, if the initiator is thermally activatable.

Generally, the process according to the present invention can be carried out on all substrates which are inert towards the employed solvent/initiator combination under the chosen conditions or on substrates, which will form a desired ionic or covalent bond between an initiator molecule and the substrate surface. Suitable substrates can be chosen from inorganic or organic materials. The substrates can basically have any desired geometrical form, as long as they fit into a reactor housing for carrying out the process of the invention.

Suitable forms are e.g. films, sheets, plates, powder, particles, moldings, fibers, especially textile fibers like cellulose, polyester, polyamide, cotton, silk, modifications and mixtures thereof or fabrics, e.g., fabrics made from the above mentioned fibers.

Suitable materials are inorganic materials such as porous or non porous inorganic carrier materials.

Suitable non-porous inorganic carrier materials are non-porous metals, non-porous glasses, non-porous ceramics or naturally occurring inorganic materials like marble or granite or the like. The surfaces of the above-mentioned materials can be mechanically processed, e.g. polished.

The inorganic materials can be used as substrates in any of the above-mentioned shapes. They can be used e.g. as bulk substances, granules, powders, chips, wires, tapes, pins or rods.

In another embodiment of the present invention, the materials used as substrates can be porous. The term "porous", as used according to the present text means materials, which have a sufficient high pore volume, surface and particle size. Suitable substrates are particular to organic or inorganic solid materials which have a pore volume of between 0.1 and 15 ml/g, preferably between 0.25 and 5 ml/g and their specific surface is greater than 1 m²/g, preferably more than 10, more than 100 or more than 1000 m²/g (BET). The particle size of suitable, porous materials is between about 10 and about 2500 µm, preferably between about 50 and about 1000 µm.

The specific surface is determined according to the well-known method of Brunauer, Emmet and Teller J. Am. Chem. Soc. (1938), 60, 309-319. The pore volume is determined by the centrifugation method according to McDaniel, J. Colloid Interface Sci. 1980, 78, 31 and the particle size is determined according to Cornillaut, Appl. Opt. 1972, 11, 265.

The term "inert" means that the substrates do not suppress the polymerization reaction and does not react with the monomers in an undesired way.

Organic, solid substrates can also be used in the process according to the present invention in any of the above-mentioned forms. Suitable organic substrates can be synthetic substrates or natural substrates. The term "natural substrates" also relates to materials which have been manufactured using natural materials, like paper, textiles, textile, fibers and the like.

Suitable synthetic organic substrates can be made from derivatives of naturally occurring materials like starch or cellulose or can be made from synthetic organic polymers. Suitable polymers are for instance polyolefins like polyethylene, polypropylene, polystyrene, polybutadiene, polyacrylonitrile, polyacrylates like polymethylacrylate, polymethylmethacrylate, polyethers like polyethyleneoxide, polypropyleneoxide, polyoxytetramethylene, polysulfites like poly-p-phenylenesulfite, polyesters, polyetheresters, fluorinated polymers like polytetrafluoroethylene, polyamides or polyurethanes. Suitable organic support materials are, e.g., described in Ullmanns Enzyklopädie der technischen Chemie, vol. 19, page 195 ff., page 265 and page 31 ff.

Suitable inorganic solids are, e.g. silica gels, silica gels obtained by precepitation, clay, alumosilicates, talc, mica, zeolites, soot, inorganic oxides like silicon dioxide, alumina, magnesia, titaniumdioxide, inorganic chlorides like magnesium chloride, sodium chloride, lithiumchloride, calciumchloride, zincchloride or calciumcarbonate. Suitable inorganic support materials are also described in Ullmanns Enzyklopädie der technischen Chemie, vol. 21, pages 439 and ff., volume 23, pages 311 and ff., volume 14, pages 633 and ff and vol. 24, pages 575 and ff.

During the polymerization according to the present invention regulators can be present. Regulators are substances which can influence the polymerization reaction and the structure of the polymer obtained. Suitable regulators are described, for instance, in Ullmanns Enzyklopädie der technischen Chemie, vol. 15, pages 188 and ff. Suitable regulators are, e.g., aromatic hydrocarbons like triphenylmethane, nitro- or nitrosoaromatics like nitrobenzene, nitrotoluene or nitrosobenzene, organic halogen compounds like tetrachloromethane, tetrabromomethane or bromotrichloromethane, organic sulphur compounds like alkylmercaptanes and xanthogenedisulfides, e.g., n-dodecylmercaptane, tert.-dodecylmercaptane, butylmercaptane, tert.-butylmercaptane, dibutyldisulfide, diphenyldisulfide, benzyldiethyldithiocarbamate or 2-phenylethyldiethyl-dithiocarbamate, or compounds bearing carbonyl functions like ketones and aldehydes, especially acetoaldehyde, propioaldehyde and acetone.

It is, however, preferred, to conduct the process according to the present invention without the use of regulators.

The process of the present invention is conducted in at least three separate steps. In a first step a), one or more radically polymerizable monomers are polymerized in the presence of a system comprising at least one initiator on a substrate and at least one ethylenical unsaturated monomer in the gas phase.

In the context of the present invention the term "in the gas phase" means that the monomer or the mixture of two or more monomers contact the initiator or a propagating species by direct access from the gas phase without interaction in a liquid phase.

This does, however, not mean, that the gas phase in the process according to the present invention must be completely free from "liquids". It is also within the scope of the present invention that the gas phase contains microdroplets of monomers which can be spread in the gas phase by a carrier gas, depending on the method of introduction of the monomer or the monomer mixture into the gas phase. It is, however, preferred that the gas phase in a process according to the present invention is essentially free of such microdroplets, preferably free of microdroplets.

Without wishing to be bound by a theory, it is believed that some of the monomer molecules directly contact the active chain ends from the gas phase while other monomer molecules are adsorbed on the surface of the substrate or an already formed polymer layer on the surface and subsequently migrate to an active chain end to eventually take part in the polymerization process. It is also possible that some of the monomer molecules are adsorbed on the substrate or within the polymer layer such that they do not take part in the polymerization at all due to an immobilizing effect of the adsorption process on the monomer molecules.

Generally speaking, the process according to the present invention will not require a solvent or a liquid monomer phase for the polymerization according to the present invention. It is, however, not excluded that the gas phase contains molecules that do not take part in the polymerization process, such as solvent molecules. It is also not excluded that the gas phase contains molecules other than the polymerizable monomers, such as a carrier gas or a mixture of two or more carrier gases.

Carrier gases are substances which are in a gaseous state at the operating temperature of the present invention. Preferably compounds are used as carrier gases which are in a gaseous state at the reaction temperature and pressure, preferably at a temperature of 80 °C or less, more preferably at a temperature of 50 or 30 °C or less. Suitable carrier gases are essentially inert towards the monomers, the initiators and the substrate under the reaction conditions and thus do not take part in the polymerization itself. Gases like He, Ne, Ar, N₂, CO₂, H₂O and the like.

The polymerization itself takes place in a reactor which can generally have any shape or size as long as it is able to host the initiator covered substrate. Suitable reactors can be tightly sealed against the surrounding atmosphere.

In the first step of the process according to the present invention, the monomer is introduced into a reactor in the gaseous state. This can generally be done by all methods known to the skilled person like vaporizing under reduced pressure, vaporizing by heating, bubbling with carrier gas flow or sublimating by heating under reduced pressure.

The monomers can be introduced into the reactor before during or after the activation of the initiator. In a preferred embodiment of the present invention, the monomers are introduced before or during the activation of the initiator.

During the first step of the polymerization according to the present invention, monomer is consumed from the gas phase and polymer is formed on the surface of the substrate. The reaction time for the first step of the process according to the present invention depends upon the desired molecular weight of the first polymer block of the desired block copolymer and the speed of the reaction. The reaction speed can be varied in conventional ways known to the skilled person, e.g. by variation of the monomer type, monomer concentration, reaction temperature, flow rate of the carrier gas, the surface area of the substrate coated by the initiator or accelerators such as light.

In order to produce a copolymer according to the present invention, the polymerization of the first monomer or the first monomer mixture is stopped in step b) when the desired molecular weight or the desired composition is obtained.

The interruption of the polymerization is done by lowering the reaction temperature, the flow rate of carrier gas or the concentration of the at least one ethylenical unsaturated monomer in the gas phase such that the polymerization reaction pauses.

The interruption of the reaction can be achieved, e.g., by monomer consumption or by actively reducing the monomer concentration, e.g., by applying a vacuum to the reactor. It is within the scope of the present invention that after step b) a certain amount of monomer from step a) is still present in the gas phase which, however, does not polymerize due to its low concentration, or the rate of polymerization is very low. It is preferred that the ratio of concentration of monomers or a monomer composition remaining from step b) and the concentration of monomers or a monomer composition employed in step c) initially is less than about 0,01.

In a third step c) of the method according to the present invention, at least one ethylenical unsaturated monomer is introduced into the reactor which is different from the at least one ethylenical unsaturated monomer in the gas phase of step a).

The introduction of a third monomer in the third step c) is governed by the same rules as the introduction of the first monomer or monomer mixture of step a).

It is also within the scope of the present invention to repeat steps b) and c) one or more times, where the above requirements for steps b) and c) also apply.

The reaction steps can generally be performed at a temperature of from about -80 to about 200 °C, depending on the type of initiator, the type of activation and the monomer types. In a preferred embodiment of the present invention, the reaction temperature in the steps of the inventive process is from about 0 °C to about 150 °C or from about 20 to about 100 °C or from about 40 to about 70 °C, especially from about 45 to about 65 °C.

The reaction time can essentially last for any time specified by the operator, as long as the chain ends of the polymers are still "alive" and the polymerization can still propagate. Generally, the reaction time per step, i.e., for a chosen type of monomer or for a chosen monomer composition, the reaction time can vary in broad ranges, e.g., between about 10 minutes to about 5 days, depending on the type of monomers, the desired molecular weight, the initiator and the substrate. In a preferred embodiment of the present invention, the reaction time for one polymerization step is in the order of from about 1 to about 50 h, preferably from about 2 to about 40 h.

The invention is explained in more detail by the following examples. The examples have an illustrating function and are not meant to limit the scope of the invention.

The process according to the invention can be used to produce block copolymers in a solvent-free, effective way on an almost unlimited variety of substrates. The possibility to spread the initiator on the substrates in different patterns furthermore opens a way to produce block copolymers in predetermined 2D or 3D patterns. The present invention thus also relates to a process wherein the initiator is provided on the substrate in a 2D or 3D pattern. By extending the process according to the present invention to substrates covered by a patterned initiator it has been possible to produce two dimensional and three-dimensional polymer structures in a very efficient and effective way. Generally, all types of patterns and structures can be obtained by using the process according to the present invention. Suitable 2D or 3D structures are, e.g., circular or elliptical areas, angular areas like triangular, polyangular, rectangular and square areas, regularly or irregularly repeating 2D patterns like stripes, dots and the like, all types of irregular 2D patterns like figures or characters, all types of 3D patterns like cubes, cones, spheres, rods, cylinders, pyramids or regularly or irregularly shaped objects lice microstructures and the like.

The block copolymers obtainable according to the present invention can generally have any desired type of block structure. They can, for instance, have a simple AB-structure, where A and B denote different types of monomers. Block copolymers according to the present invention can, however, also have a more complicated structure, depending on the numbers of consecutive polymerization steps and the monomer feed in each polymerization step. It is within the scope of the present invention that the monomer feed in each polymerization step of the inventive process can not only consist of one single type of monomer but can also consist of two or more different types of monomers. Thus, a block copolymer according to the present invention can have two or more consecutive blocks of different monomer composition, wherein the monomer composition within each block can consist of only one type of monomer or can be a composition of two or more different types of monomers. For example, in a first polymerization step a block structure AAAAAAAAAAAAAA consisting of only one type of monomer A is produced. In a second polymerization step, a monomer feed consisting of monomers A and B is introduced so that the second block has a random block structure BAABABBABABB consisting of monomers A and B. In a third step, for instance, monomers C and D can be said in to the polymerization process, which will result in a third random block CDCCDCDDCDCD in the block copolymer according to the present invention.

It is obvious from the above that the block copolymers obtainable according to the present invention can generally be tailor made with regard to their composition by varying the monomer feed in the consecutive polymerization steps as described above.

The block copolymers obtainable according to the present invention generally have a number average molecular weight Mₙ between about 3,000 and about 2,000,000, depending on the type of monomer, initiator, the initiator concentration per area, the substrate or the reaction conditions like temperature and monomer concentration.

The block copolymers obtainable according to the present invention generally have a polydispersity index (PDI) in the range of from about 1.4 to about 30, also depending on the above mentioned reaction parameters.

The polymer layer can be modified after the polymerization has been completed, e.g., by a polymer analogous reaction or the like. Suitable polymer analogous reactions can be, e.g., grafting or ester cleavage or the like.

The invention is explained in further detail by the following examples.

### EXAMPLES:

### Example 1:

### Preparation of poly(methylmethacrylate-block-styrene) on a glass slide surface

Monomers, methylmetacrylate (MMA, 99,0 %) and styrene (St, 99 %) were purchased from Kishida Chemical Inc. purified by distillation. Radical initiator, 2,2-azo bis(isobutylonitrile) (AIBN) was purchased from Otsuka Chemical Inc. and used as received.

Reactions were carried out in a H-shaped glass tube reactor with a vacuum cock and a glass filter (pore size 20-30µm) at a bridge part as a separator. Initiator solution (AIBN, 4.02 x 10⁻¹ mol l⁻¹) was diluted 10-fold with acetone. A 0.05 ml aliquot of the diluted solution was spread on a glass slide surface (0.9 cm²). The substrate was dried at ambient temperature for 2 h and set in a bottom of the H-shaped glass tube. Methylmethacrylate (MMA, 0.5 ml) and 4-tert-butylprocatechol (20 mg) were added in another bottom. The tube was subjected to three times of the freeze-pump-thaw cycle and then sealed *in vacuo.* Reactions were carried out in an oven at 60 ° C for 2 h. After the first stage, remained MMA was distilled under reduced pressure. Second monomer, styrene (St, 0,5 ml), was introduced with a syringe through the glass cock under N₂ gas flow. The tube was subjected again to the three times of the freeze-pump-thaw cycle and then sealed *in vacuo.* Second stage of the copolymerization was also carried out in a similar way to the first stage without addition of any other initiators at 60 °C for 4 h. After the second stage, product formed on slide glass was analyzed intact by fourier transfer infrared (FTIR) spectroscopy and then dissolved in chloroform to be analyzed by gel permeation chromatography (GPC). The product was purified by precipitation with methanol. The purified product was analyzed by ¹H-NMR.

FTIR spectroscopy was performed using a JASCO FT-IR 460 plus spectrometer. The FTIR spectrum of the product showed a sharp CO ester peak at 1730 cm⁻¹. ¹H-NMR spectrum was measured on a 300-MHz JEOL AL-300 spectrometer and showed a sharp singlet peak at 3.65 ppm and broad peaks at 6.2-7.2 ppm assigned to -COOCH₃ of MMA unit and aromatic ring protons of St unit, respectively. The sharp singlet peak at 3.65 ppm indicates that the product is not random copolymer. Unit ratio of the product was calculated from the ¹H-NMR spectrum to be [MMA] : [St] = 0.29: 0.71. Molecular weight of product was measured on a TOSOH HLC-8220 GPC system with a refractive index (RI) and ultra violet (UV, 254 nm) detectors. Both GPC profiles of the product monitored with RI and UV detector had a similar figure and near equal average molecular weights (Mn_{RI} 126,000, Mw_{RI} 694,000; Mn_{UV} 146,200, Mw_{UV} 694,600. The unit ratio, [MMA]: [St] of each fraction was also calculated from the GPC profiles and it was nearly constant at about 0.35 - 0.45 : 0.65- 0.55 over the entire range of molecular weight.

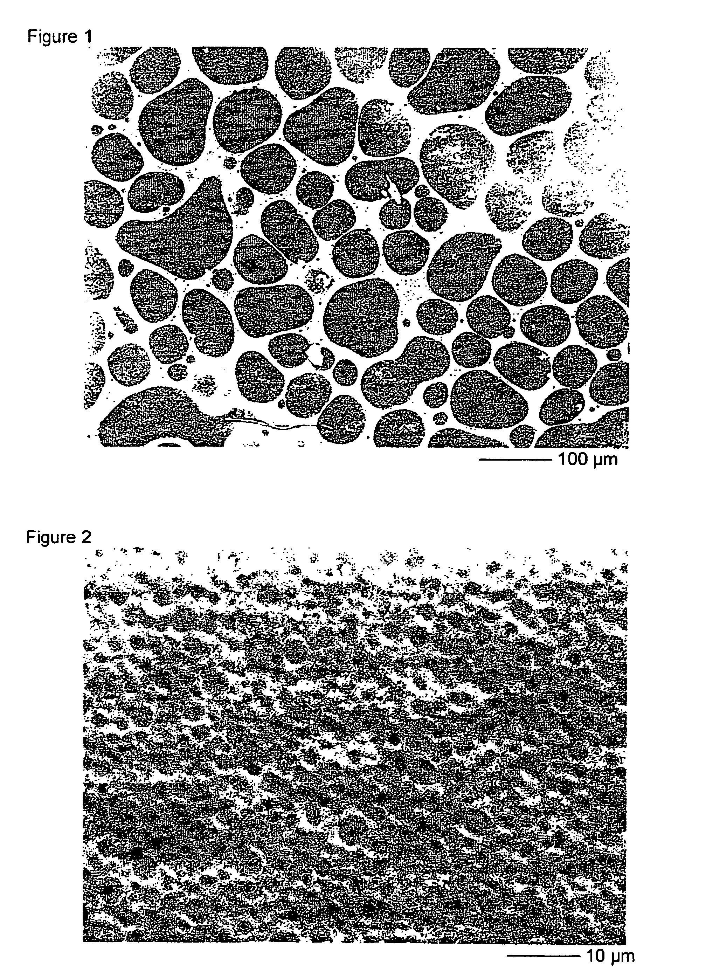

To confirm the block structure of P(MMA-co-St), the phase-separation behavior is examined. A compositional SEM images formed by a backscattered electron detector (BSE) was compared with a blend of homopolymers, PMMA (Mₙ 253,800, PDI 4.07) and PSt (Mₙ 63,700, PDI 1.86). This combination is a typical immiscible-blend. In the case of blend film, a macroscopic phase-separation was observed in the diameter range of 100 to 300 µm (figure 1). On the other hand, the compositional image of the film of the product of example 1 showed disordered micro domains (diameter range less than 2 µm) with a poor contrast (figure 2). The latter image indicates that the product of example 1 is not a blend.

Differential scanning calorimetry (DSC) measurement were carried out using a Seiko Instruments Inc. EXSTAR6000-DSC6200 under a nitrogen flow of 20 ml min⁻¹. The film of the product indicated two transition points at 121.8 and 86.8 ° C assigned to PMMA- and PSt-domains, respectively.

These results indicate that the product is a block copolymer, poly(MMA-*block*-St).

### Comparison example 1:

MMA (99.0 %) and St (99.5 %) were purchased from Kishida Chemical Inc. and purified by distillation. The radical initiator, AIBN, was purchased from Otsuka Chemical Inc. and used as received. The substrate, PTFE-film for the infrared spectoscopy (IR card from 3M, surface area 1.45 cm²) was used as purchased.

Reactions were carried out in a H-shaped glass tube reactor with a vacuum cock and a glass filter (pore size 20-30µm) at a bridge part as a separator. Initiator solution (AIBN, 4.02 x 10⁻¹ mol l⁻¹) was diluted 10-fold with acetone. A 0.05 ml aliquot of the diluted solution was spread on a PTFE-film surface. The substrate was dried at ambient temperature for 2 h and set in a bottom of the H-shaped glass tube. Methylmethacrylate (MMA, 0.5 ml) styrene (St, 0.5 ml) and 4-tert-butylprocatechol (20 mg) were added in another bottom. The tube was subjected to three times of the freeze-pump-thaw cycle and then sealed *in vacuo*. Reactions were carried out in an oven at 60 ° C for 8 h. After the reaction, product formed on PTFE-film was analyzed intact by fourier transfer infrared (FTIR) spectroscopy and then dissolved in chloroform to be analyzed by gel permeation chromatography (GPC). The product was purified by precipitation with methanol. The purified product was analyzed by ¹H-NMR.

The FTIR spectrum of the product showed a sharp CO peak at 1.730 cm⁻¹. The ¹H-NMR spectrum showed broad peaks at 2.2 - 3.7 ppm and broad peaks at 6.6 - 7.3 ppm assigend to COOCH₃ of MMA unit and aromatic ring protons of St unit, respectively. The broad peaks at 2.2 - 3.7 ppm indicate that the product is a random copolymer. Unit ratio of the product was calculated from the H-NMR spectrum to be [MMA]: [St] = 0.54 : 0.46. Molecular weight of product was measured on the GPC system. Both GPC profiles of the product monitored with RI and UV detectors had a similar figure and near equal average molecular weights (Mn_{RI} 40,500, Mw_{RI} 223,100; Mn uv 35,800, Mw_{UV} 227,600). The unit ratio [MMA]: [St] of each fraction was also calculated from the GPC profiles and it was nearly constant at about 0.8 - 0.6 : 0.2 - 0.4 over the entire range of molecular weight. From DSC measurement, the film sample of the product indicated one transition point at 92.1 °C.

These results indicate that the product is a random copolymer, poly(MMA-*ran*-St).

### Example 2

### Preparation of poly (methyl methacrylate-block-Styrene) on a polyethylene (PE)-film surface

MMA (99.0 %) and St (99.5 %) were purchased from Kishida Chemical Inc. and purified by distillation. The radical initiator, AIBN, was purchased from Otsuka Chemical Inc. and used as received. The substrate, PE-film for the infrared specrtoscopy (IR card from 3M, surface area 1.45 cm²) was used as purchased.

The reactions were carried out in the H-shaped glass tube reactor. The initiator solution (AIBN, 4.02 x 10⁻¹ mol 1⁻¹) was diluted 10-fold with acetone. A 0.05 ml aliquot of the diluted solution was spread on a PE-film surface. The substrate was dried at ambient temperature for 2 h and set in a bottom of the H-shaped glass tube. MMA (0.5 ml) and 4-tert-butylprocatechol (20 mg) were added in another bottom. The tube was subjected to three times of the freeze-pump-thaw cycle and the sealed *in vacuo*. Reactions were carried out in an oven at 60 ° C for 3 h. After the first stage, remained MMA was distilled away under reduced pressure. Second monomer, styrene (0.5 ml) was introduced with a syringe through the glass cock under N₂ gas flow. The tube was subjected again to the three times of the freeze-pump-thaw cycle and then sealed *in vacuo.* The second stage of the copolymerization was also carried out by similar way to the first stage without addition of any other initiators at 60 ° C for 4 h. After the second stage, product formed on PE-film was analyzed intact by fourier transfer infrared (FTIR) spectroscopy, and then dissolved in chloroform to be analyzed by GPC. The product was then purified by precipitation with methanol. The purified product was analyzed by ¹H-NMR.

The FTIR spectrum of the product showed a sharp CO ester peak at 1730 cm⁻¹. The ¹H-NMR spectrum showed a sharp singlet peak at 3.65 ppm and broad peaks at 6.2-7.2 ppm assigned to -COOCH₃ of MMA unit and aromatic ring protons of a styrene unit respectively. The sharp singlet peak at 3.65 ppm indicates that the product is not a random copolymer. The unit ratio of the product was calculated from the ¹H-NMR spectrum to be [MMA]: [St] = 0.63 : 0.37. The molecular weight of the product was measured on the GPC system. Both GPC profiles of the product monitored with RI and UV detectors had a similar figure and near equal average molecular weights (Mn_{RI} 147,500, Mw_{RI} 657,600; Mn _{UV} 274,700, Mw_{UV} 589,200). The unit ratio [MMA]: [St] of each fraction was also calculated from the GPC profiles and it was nearly constant at about 0.75 - 0.7 : 0.25 - 0.3 over the entire range of molecular weight. These results indicate that the product is a block copolymer, poly (MMA-*block*-styrene). From DSC measurements, the film sample of the product indicated two transition points at 122.2 and 94.4 ° C assigned to PMMA- and PSt-domains, respectively.

These results indicate that the product is a block copolymer, poly (MMA-*block*-styrene).

### Example 3:

### Controllable polymer deposition by "living" gas-phase polymerization of methylmethacrylate on aluminum pans MMA (99.0 %) was purchased from Kishida Chemical Inc. and purified by distillation. Radical initiator AIBN was purchased from Otsuka Chemical Inc. and used as received Aluminum pan (diameter 5 mm) as substrate was used as purchased.

Time-course test was achieved on AI pans coated by AIBN in the H-shaped glass tube reactor. The reaction was repeated as a cycle; (1) gas-phase deposition polymerization (GDP), (2) cooling to ambient temperature, (3) sampling under N₂ flow, (4) three times of freeze-pump-thaw cycle, (5) degassing and (6) heating for (1) GDP.

The initiator solution (AIBN 4.02 x 10⁻¹ mol 1⁻¹) was diluted 10-fold with acetone. A 0.01 ml aliquot of the solution was spread on each Al pan surface. The substrates were dried at ambient temperature for 2 h and set in a bottom of the H-shaped glass tube. MMA (0.5 ml) and 4-tert-butylprocatechol (20 mg) were added in another bottom. The tube was subjected to three times of the freeze-pump-thaw cycle and then sealed *in vacuo.* Reactions were carried out in an oven at 55 ° C. After one cycle of the reaction, each product was dissolved in chloroform to be analyzed by GPC. The product was then purified by precipitation with methanol. The purified product was analyzed by FTIR and ¹H-NMR.

FTIR spectroscopy was performed using a JASCO FT-IR 460 plus spectrometer. The FTIR spectra of the products showed a sharp CO ester peak at 1730 cm⁻¹. ¹H-NMR spectra were measured on a 300 MHz JEOL AL-300 spectrometer and showed a sharp singlet peak at 3.65 ppm assigned to -COOCH₃ of MMA unit. Molecular weights of the products were measured on a TOSOH HLC-8220 GPC system with a refractive index (RI) detector. The GPC profiles of products were shifted to higher molecular weight with the time. The plots of polymer yield vs. Mn indicated a linear relationship up to 250,00 in Mn. These results indicate the "living" nature of this GDP process. Therefore, the polymer deposition on substrates is precisely controllable with the GDP process.

### Example 4:

### Preparation of poly(MMA-block-2,2,3,3,3-pentafluoropropyl methacrylate) on a glass slide surface

The reactions were carried out in the H-shaped glass tube reactor with a vacuum cock and a glass filter (pore size 20-30 µm) as a separator at a bridge part. The initiator solution (AIBN, 4.02 x 10⁻² mol 1⁻¹) was diluted 10-fold with acetone. A 0.05 ml (2.1 mg AIBN) aliquot of the diluted solution was spread on a glass slide surface. The substrate was dried at ambient temperature for 2 h and set in a bottom of the H-shaped glass tube. MMA (0.5 ml) and 4-tert-butylprocatechol (20 mg) were added in another bottom. The tube was subjected to three times of the freeze-pump-thaw cycle and then sealed *in vacuo.* The reaction was carried out in an oven at 50 ° C for 2.5 h. After the first stage, remained MMA was distilled away under reduced pressure. Second monomer, 2,2,3,3,3-pentafluoropropyl methacrylate (PFPME, 0.5 ml)was introduced with a syringe through the glass cock under N₂ gas flow in another bottom. The tube was subjected again to the three times of the freeze-pump-thaw cycle and then sealed *in vacuo.* The second stage of the copolymerization was also carried out by similar way to the first stage without addition of any other initiators at 60 ° C for 13 h. After the second stage, polymer (110 mg) formed on the substrate was analyzed intact by fourier transfer infrared (FTIR) spectroscopy, and then dissolved in chloroform to be analyzed by GPC. The product was then purified by precipitation with methanol. The purified product was analyzed by ¹H-NMR.

The ¹H-NMR spectrum showed a sharp singlet peak at 3.60 ppm and a broad peak at 4.58 - 4.32 ppm assigned to -COOCH₃ of the MMA unit and COOCH₂CF₂CF₃ of the PFPMA unit respectively. The unit ratio of the product was calculated from the ¹H-NMR spectrum to be [MMA]: [PFPMA] = 0.35 : 0.65.

The GPC profiles of the product monitored with RI and UV detectors showed the opposite polarity but a similar figure and near equal average molecular weights (Mn_{RI} 252,700, Mw_{RI} 1,412,400; Mn uv 515,500, Mw_{UV} 1,537,600. The intensity ratio Int_{UV}/Int_{RI} of each fraction was also calculated from the GPC profiles and this value was nearly constant over the entire range of molecular weight. These results indicate that the product is a block copolymer, poly (MMA-*block*-PFPMA).

## Claims

1. A process for the radical copolymerization of at least two different ethylenical unsaturated monomers in a reactor, comprising the steps of
a) radically polymerizing one or more radically polymerizable monomers in the presence of a system comprising at least one initiator on a substrate and at least one ethylenically unsaturated monomer in the gas phase,
b) lowering the concentration of the at least one ethylenically unsaturated monomer in the gas phase such that the polymerization reaction stops and
c) introducing at least one ethylenical unsaturated monomer into the reactor which is different from the at least one ethylenically unsaturated monomer in the gas phase of step a).

2. The process of claim 1, wherein at least one radically polymerizable monomers is present when the polymerization is initiated.

3. The process of claim 1 or 2, wherein the substrate is selected from the group consisting of films, sheets, plates, powders, particles, moldings, fibers or fabrics.

4. The process of one of the claims 1 to 3, wherein the substrate is selected from the group consisting of inorganic salts, glass, polymers, metals or ceramics or composites of two or more of those materials.

5. The process of one of the claims 1 to 4, wherein the concentration in step b) is lowered by letting the reaction proceed until the concentration of monomer is sufficiently low.

6. The process of one of the claims 1 to 4, wherein the concentration in step b) is lowered by removing the monomer from the gas phase by applying a vacuum.

7. The process of one of the claims 1 to 6, wherein the weight ratio of the concentration of monomers or of a monomer composition employed in step b) and the concentration of monomers or of a monomer composition employed in step c) initially is less than 0,01.

8. The process of one of the claims 1 to 7, wherein steps b) and c) are repeated with same or different monomers, and where at least one monomer in a subsequent step is different from the monomers in the preceding step.

9. The process of one of the claims 1 to 7, wherein the polymerization is conducted in the absence of solvents.

10. The process of one of the claims 1 to 9, wherein the initiator is provided on the substrate in a 2D or 3D pattern.

## Patentansprüche

1. Verfahren zur radikalischen Copolymerisation mindestens zweier verschiedener ethylenisch ungesättigter Monomere in einem Reaktor, das folgende Schritte umfasst:
a) radikalische Polymerisation von einem oder von mehreren radikalisch polymerisierbaren Monomeren in Anwesenheit eines Systems, das mindestens einen Initiator auf einem Substrat und mindestens ein ethylenisch ungesättigtes Monomer in der Gasphase umfasst;
b) Reduzierung der Konzentration des mindestens einen ethylenisch ungesättigten Monomers in der Gasphase, so dass die Polymerisationsreaktion stoppt, und
c) Einführung von mindestens einem ethylenisch ungesättigtem Monomer in den Reaktor, das sich von dem mindestens einen ethylenisch ungesättigtem Monomer in der Gasphase des Schritts a) unterscheidet.

2. Verfahren nach Anspruch 1, wobei mindestens ein radikalisch polymerisierbares Monomer anwesend ist, wenn die Polymerisation initiiert wird.

3. Verfahren nach Anspruch 1 oder 2, wobei das Substrat aus der Gruppe ausgewählt ist, die aus Filmen, Blätter, Platten, Pulvern, Partikeln, Formen, Fasern oder Geweben besteht.

4. Verfahren nach einem der Ansprüche 1 bis 3, wobei das Substrat aus der Gruppe ausgewählt ist, die aus anorganischen Salzen, Glas, Polymeren, Metallen oder Keramik oder aus dem Verbund zweier oder mehrerer dieser Materialien besteht.

5. Verfahren nach einem der Ansprüche 1 bis 4, wobei die Konzentration beim Schritt b) **dadurch** reduziert wird, dass man die Reaktion solange ablaufen lässt, bis die Monomerkonzentration ausreichend niedrig ist.

6. Verfahren nach einem der Ansprüche 1 bis 4, wobei die Konzentration beim Schritt b) **dadurch** reduziert wird, dass das Entfernen des Monomers aus der Gasphase durch Anwendung eines Vakuums erfolgt.

7. Verfahren nach einem der Ansprüche 1 bis 6, wobei das Gewichtsverhältnis der beim Schritt b) verwandten Konzentration an Monomeren oder einer Monomerzusammensetzung und der beim Schritt c) verwandten Konzentration an Monomeren oder einer Monomerzusammensetzung anfänglich niedriger als 0,01 ist.

8. Verfahren nach einem der Ansprüche 1 bis 7, wobei die Schritte b) und c) mit denselben oder unterschiedlichen Monomeren wiederholt werden und wobei mindestens ein Monomer in einem nachfolgenden Schritt sich von den Monomeren des vorhergehenden Schritts unterscheidet.

9. Verfahren nach einem der Ansprüche 1 bis 7, wobei die Polymerisation in Abwesenheit von Lösungsmitteln durchgeführt wird.

10. Verfahren nach einem der Ansprüche 1 bis 9, wobei der Initiator auf dem Substrat in einem 2D- oder 3D-Muster ausgeführt ist.

## Revendications

1. Procédé pour la copolymérisation par voie radicalaire d'au moins deux monomères à insaturation éthylénique différents dans un réacteur, comprenant les étapes consistant à :
a) polymériser par voie radicalaire un ou plusieurs monomères polymérisables par voie radicalaire en présence d'un système comprenant au moins un initiateur sur un substrat et au moins un monomère à insaturation éthylénique dans la phase gazeuse,
b) abaisser la concentration dudit au moins un monomère à insaturation éthylénique dans la phase gazeuse de sorte que la réaction de polymérisation cesse et
c) introduire au moins un monomère à insaturation éthylénique dans le réacteur, qui est différent dudit au moins un monomère à insaturation, éthylénique dans la phase gazeuse de l'étape a).

2. Procédé selon la revendication 1, dans lequel au moins un monomère polymérisable par voie radicalaire est présent lors de l'initiation de la polymérisation.

3. Procédé selon la revendication 1 ou 2, dans lequel le substrat est choisi dans le groupe formé par les films, les feuilles, les plaques, les poudres, les particules, les moulages, les fibres ou les tissus.

4. Procédé selon l'une quelconque des revendications 1 à 3, dans lequel le substrat est choisi dans le groupe formé par les sels inorganiques, le verre, les polymères, les métaux ou les céramiques ou les composites d'un ou de plusieurs de ces matériaux.

5. Procédé selon l'une quelconque des revendications 1 à 4, dans lequel la concentration dans l'étape b) est abaissée en laissant la réaction se dérouler jusqu'à ce que la concentration du monomère soit suffisamment faible.

6. Procédé selon l'une quelconque des revendications 1 à 4, dans lequel la concentration dans l'étape b) est abaissée en éliminant le monomère de la phase gazeuse en faisant le vide.

7. Procédé selon l'une quelconque des revendications 1 à 6, dans lequel le rapport pondéral de la concentration de monomères ou d'une composition de monomères, employés dans l'étape b) et de la concentration de monomères ou d'une composition de monomères, employés dans l'étape c), est initialement inférieur à 0,01.

8. Procédé selon l'une quelconque des revendications 1 à 7, dans lequel les étapes b) et c) sont répétées avec des monomères identiques ou différents, et où au moins un monomère dans une étape subséquente est différent des monomères dans l'étape précédente.

9. Procédé selon l'une quelconque des revendications 1 à 7, dans lequel la polymérisation se réalise en l'absence de solvants.

10. Procédé selon l'une quelconque des revendications 1 à 9, dans lequel l'initiateur est fourni sur le substrat selon un motif 2D ou 3D.
